# EUROPÄISCHE PATENTSCHRIFT

(11) **EP 2 960 092 B1**
(45) Veröffentlichungstag und Bekanntmachung des Hinweises auf die Patenterteilung: **27.12.2017**
(21) Anmeldenummer: 15001382.9
(22) Anmeldetag: 07.05.2015
(51) Int. Cl.: F02M 25/08, G01F 23/32, G01F 23/00, B60K 15/035, B60K 15/03

(54) **KRAFTSTOFFTANK MIT EINEM AKTIVKOHLEFILTER UND VERFAHREN ZUM ANZEIGEN DES KRAFTSTOFFFÜLLSTANDS IM KRAFTSTOFFTANK MIT SIGNALUNTERDRÜCKUNG BEI EINEM KRITISCHEN UNTERDRUCK WÄHREND DER REGENERATION DES AKTIVKOHLEFILTERS**
FUEL TANK WITH AN ACTIVATED CARBON FILTER AND METHOD FOR DISPLAYING THE FUEL LEVEL IN THE FUEL TANK WITH SIGNAL SUPPRESSION FOR CRITICAL NEGATIVE PRESSURE DURING THE REGENERATION OF THE ACTIVATED CARBON FILTER
RÉSERVOIR DE CARBURANT DOTÉ D'UN FILTRE À CHARBON ACTIF ET PROCÉDÉ D'AFFICHAGE DU NIVEAU DE REMPLISSAGE DE CARBURANT DANS LE RÉSERVOIR DE CARBURANT AVEC VERROUILLAGE DU SIGNAL EN CAS DE DÉPRESSION CRITIQUE PENDANT LA RÉGÉNÉRATION DU FILTRE À CHARBON ACTIF

(30) Priorität: 27.06.2014 DE 102014009634
(43) Veröffentlichungstag der Anmeldung: 30.12.2015
(73) Patentinhaber: AUDI AG, 85045 Ingolstadt (DE)
(72) Erfinder: Hagen, Harald, DE - 95473 Creussen (DE)

(56) Entgegenhaltungen:
- EP-A1- 2 437 036
- DE-A1- 4 003 751
- DE-A1- 4 203 099
- DE-A1-102009 030 077
- JP-A- 2012 036 769

## Beschreibung

Die Erfindung betrifft einen Kraftstofftank für einen Verbrennungsmotor, mit Einrichtungen zum Messen des Füllstands oder Füllvolumens im Kraftstofftank, zum Erzeugen eines mit dem Füllstand oder Füllvolumen korrelierenden Signals und zum Zuführen des Signals zu einer Tankanzeige, sowie mit einer Einrichtung zum Modifizieren des Signals bei einer Verformung des Kraftstofftanks. Die Erfindung betrifft weiter ein Verfahren zum Anzeigen eines Füllstands oder Füllvolumens eines Kraftstofftanks eines Verbrennungsmotors, bei dem der Füllstand oder das Füllvolumen ermittelt und ein mit dem Füllstand oder Füllvolumen korrelierendes Signal erzeugt sowie zu einer Tankanzeige zugeführt wird, und bei dem das Signal bei einer Verformung des Kraftstofftanks modifiziert wird.

Bei Kraftfahrzeugen sind Kraftstofftanks mit Einrichtungen zum Messen des Füllstands oder Füllvolumens im Kraftstofftank, zum Erzeugen eines mit dem Füllstand oder Füllvolumen im Kraftstofftank korrelierenden Signals, sowie zum Zuführen des Signals zu einer Tankanzeige auf einer Instrumententafel des Kraftfahrzeugs allgemein bekannt.

Darüber hinaus sind Kraftstofftanks moderner Kraftfahrzeuge auch mit einer Tankentlüftungseinrichtung ausgestattet. Diese verhindert zum einen, dass sich bei einem größeren Anstieg der Umgebungstemperaturen aufgrund der dadurch hervorgerufenen Verdunstung von Kraftstoff im Inneren des Kraftstofftanks ein unerwünschter Überdruck aufbauen kann und gestattet zum anderen beim Betanken des Kraftfahrzeugs ein Entweichen des vom Kraftstoff verdrängten Gasgemischs aus dem Gas- oder Kopfraum des Kraftstofftanks.

Die Tankentlüftungseinrichtung umfasst gewöhnlich einen der Aktivkohlefilter, der durch eine Tankentlüftungsleitung mit dem Gas- oder Kopfraum des Kraftstofftanks verbunden ist. Beim Betanken des Kraftstofftanks wird das vom Kraftstoff verdrängte Gasgemisch aus dem Gas- oder Kopfraum in den Aktivkohlefilter zugeführt, um eine unerwünschte Zufuhr von Kohlenwasserstoffen in die Umgebung zu verhindern.

Um die in den Aktivkohlefilter zugeführten flüchtigen Kohlenwasserstoffe wieder aus dem Aktivkohlefilter zu entfernen, muss der Aktivkohlefilter periodisch regeneriert werden. Dazu wird gewöhnlich in vorbestimmten Lastzuständen des Verbrennungsmotors, die Fahr- und Standphasen einschließen können, Umgebungsluft durch den Aktivkohlefilter hindurch in einen Ansaugtrakt des Verbrennungsmotors angesaugt, um den Aktivkohlefilter von Kohlenwasserstoffen frei zu spülen und die von der Umgebungsluft mitgeführten Kohlenwasserstoffe in den Brennräumen des Verbrennungsmotors zu verbrennen.

Zu diesem Zweck ist der Aktivkohlefilter einerseits durch eine Saugleitung mit einem Ansaugtrakt des Verbrennungsmotors und andererseits durch einen Ein- und Auslass mit der Umgebung verbunden. Die Saugleitung enthält ein Ventil, das auf dem Fachgebiet als Spülventil (purge valve) oder auch als Entlüftungsventil bezeichnet wird und dessen Öffnungs- und Schließzustand von einem Motorsteuergerät des Verbrennungsmotors gesteuert wird.

Die JP2012036769 A offenbart einen Kraftstofftank für einen Verbrennungsmotor, mit Einrichtungen zum Ermitteln des Füllstands im Kraftstofftank, zum Erzeugen eines mit dem Füllstand korrelierenden Signals und zum Zuführen des Signals zu einer Tankanzeige. Ein Kraftstofftank mit einem Aktivkohlefilter und einer vom Filter zum Ansaugtrakt des Verbrennungsmotors führenden Saugleitung mit einem Spülventil ist zum Beispiel in der US 2007/0113633 A1 oder der US 2009/0277251 A1 offenbart.
Beim Betanken des Kraftstofftanks ist das Spülventil geschlossen, so dass das vom Kraftstoff aus dem Kraftstofftank verdrängte Gasgemisch nach der Filterung im Aktivkohlefilter durch den Ein- und Auslass in die Umgebung strömen kann. Beim Regenerieren des Aktivkohlefilters wird das Spülventil geöffnet, so dass der im Ansaugtrakt herrschende Unterdruck am Aktivkohlefilter anliegt und Luft aus der Umgebung durch den Ein- und Auslass in den Aktivkohlefilter und durch diesen in den Ansaugtrakt strömt. Wenn es sich beim dem Kraftstofftank um einen Drucktank handelt, kann der Ein- und Auslass des Aktivkohlefilters mit einem Absperrventil versehen sein, das normalerweise geschlossen ist und beim Betanken sowie bei der Regeneration des Aktivkohlefilters geöffnet wird. Da der Aktivkohlefilter durch die Tankentlüftungsleitung mit dem Gas- oder Kopfraum des Kraftstofftanks kommuniziert, liegt während der Regeneration des Aktivkohlefilters auch im Gas- oder Kopfraum des Kraftstofftanks ein Unterdruck an, der eine Verformung des Kraftstofftanks verursachen kann. Eine solche Verformung kann zu einer Verfälschung des zur Tankanzeige zugeführten Füllstands- oder Füllvolumensignals führen, so dass dort ein Füllstand oder Füllvolumen angezeigt wird, die vom tatsächlichen Füllstand oder Füllvolumen abweichen.

Um dies zu verhindern, offenbart die DE 10 2010 045 212 A1 bereits einen Kraftstofftank und ein Verfahren der eingangs genannten Art. Bei dem bekannten Verfahren wird die Verformung des Kraftstofftanks erfasst und auf der Grundlage der erfassten Verformung ein Korrekturwert für das zur Tankanzeige zugeführte Signal berechnet. Diese Lösung macht jedoch eine aktive Erfassung der Verformung des Kraftstofftanks notwendig, wofür ein nicht unerheblicher Aufwand erforderlich ist.

Ausgehend hiervon liegt der Erfindung die Aufgabe zugrunde, einen Kraftstofftank und ein Verfahren der eingangs genannten Art dahingehend zu verbessern, dass der notwendige Aufwand reduziert werden kann.

Diese Aufgabe wird bei dem Kraftstofftank erfindungsgemäß durch die Merkmale des Anspruchs 1 gelöst, wobei Mittel zum Aktivieren der Einrichtung zum Modifizieren des Signals beim Öffnen eines Ventils zwischen einem mit dem Kraftstofftank kommunizierenden Aktivkohlefilter und einem Ansaugtrakt des Verbrennungsmotors vorhanden sind. Das Ventil wird nachfolgend als Spülventil bezeichnet.

Das erfindungsgemäße Verfahren nach Anspruch 7 ist auch dadurch gekennzeichnet, dass die Modifikation des Signals bei der Regeneration eines mit dem Kraftstofftank kommunizierenden Aktivkohlefilters ausgelöst wird.

Mit anderen Worten wird die Modifikation des Signals nicht wie bei dem Verfahren aus der DE 10 2010 045 212 A1 ausgelöst, wenn eine Verformung des Kraftstofftanks festgestellt wird, sondern wird generell in Regenerationsphasen des Aktivkohlefilters ausgelöst, in denen das Spülventil zwischen dem Aktivkohlefilter und dem Ansaugtrakt geöffnet ist.

Der Erfindung liegt der Gedanke zugrunde, dass zumindest bei Kraftstofftanks, die über eine Tankentlüftungsleitung und den Aktivkohlefilter mit der Umgebung kommunizieren, ein zur Verformung des Kraftstofftanks und damit zur Verfälschung des Signals führender Unterdruck im Kraftstofftank eigentlich nur dann auftreten kann, wenn der Kraftstofftank während einer Regeneration des Aktivkohlefilters mit dem Ansaugtrakt des Verbrennungsmotors kommuniziert. Dies ist immer dann der Fall, wenn das Spülventil zwischen dem Aktivkohlefilter und dem Ansaugtrakt geöffnet ist.

Während es grundsätzlich möglich ist, das Signal über die gesamte Dauer der Regeneration des Aktivkohlefilters bzw. während der gesamten Öffnungszeit des Spülventils zu modifizieren, sieht eine bevorzugte Ausgestaltung der Erfindung vor, dass das Signal erst dann modifiziert wird, wenn ein im Kraftstofftank herrschender Unterdruck einen kritischen Unterdruck-Schwellenwert unterschreitet. Zu diesem Zweck wird zweckmäßig der im Kraftstofftank herrschende Unterdruck ermittelt und mit dem kritischen Unterdruck-Schwellenwert verglichen.

Dazu wird vorteilhaft mittels eines ersten Drucksensors der Dampfdruck im Kraftstofftank und mittels eines zweiten Drucksensors der Umgebungsdruck gemessen. Zur Ermittlung des Unterdrucks im Kraftstofftank wird die Druckdifferenz aus den beiden Messwerten gebildet. Aus dieser Druckdifferenz lässt sich die Verformung des Kraftstofftanks ableiten.

Sobald der im Kraftstofftank herrschende Unterdruck den kritischen Unterdruck-Schwellenwert nicht mehr unterschreitet, ist eine Modifikation des Signals nicht mehr erforderlich, so dass der Tankanzeige wieder das nicht-modifizierte Signal zugeführt wird.

Die Modifikation des Signals kann erfindungsgemäß auf zwei verschiedenen Wegen erfolgen. Gemäß einer ersten Alternative der Erfindung wird das möglicherweise fehlerhafte Signal unterdrückt oder ausgeblendet. In diesem Fall wird der Tankanzeige an Stelle des unterdrückten oder ausgeblendeten Signals vorteilhaft ein Ersatz-Signal zugeführt, das mit einem unmittelbar vor dem Einleiten der Regeneration ermittelten Füllstand oder Füllvolumen korreliert. Bei einer elektronischen Tankanzeige kann alternativ auch vorgesehen sein, während der Unterdrückung oder Ausblendung des Signals weiterhin den bis dahin angezeigten Füllstand bzw. das bis dahin angezeigte Füllvolumen anzuzeigen.

Eine zweite Alternative der Erfindung sieht hingegen vor, das möglicherweise fehlerhafte Signal mittels eines Korrekturwerts zu korrigieren, der zweckmäßig auf der Grundlage des im Kraftstofftank gemessenen Unterdrucks berechnet und dann zur Korrektur des Signals verwendet wird, bevor dieses als korrigiertes Signal zur Tankanzeige zugeführt wird.

Im Folgenden wird die Erfindung anhand von zwei in der Zeichnung dargestellten Ausführungsbeispielen näher erläutert.
Fig. 1 zeigt eine schematische Darstellung eines erfindungsgemäßen Kraftstofftanks eines Verbrennungsmotors mit einem Aktivkohlefilter und einem Spülventil zwischen dem Aktivkohlefilter und einem Ansaugtrakt des Verbrennungsmotors;
Fig. 2 zeigt für drei verschiedene Verformungen des Kraftstofftanks Füllstands-Füllvolumen-Kennlinien, die eine Beziehung zwischen dem Füllvolumen und einem gemessenen Füllstand im Kraftstofftank anzeigen;
Fig. 3 zeigt ein schematisches Ablaufdiagramm von Schritten einer ersten erfindungsgemäßen Verfahrensalternative, bei der ein möglicherweise fehlerhaftes Signal ausgeblendet oder unterdrückt und durch ein anderes Signal ersetzt wird;
Fig. 4 zeigt ein schematisches Ablaufdiagramm von Schritten einer zweiten erfindungsgemäßen Verfahrensalternative, bei der ein möglicherweise fehlerhaftes Signal korrigiert wird;
Fig. 5 zeigt eine schematische Darstellung von Komponenten einer Steuerung zur Durchführung der ersten und zweiten Verfahrensalternative.

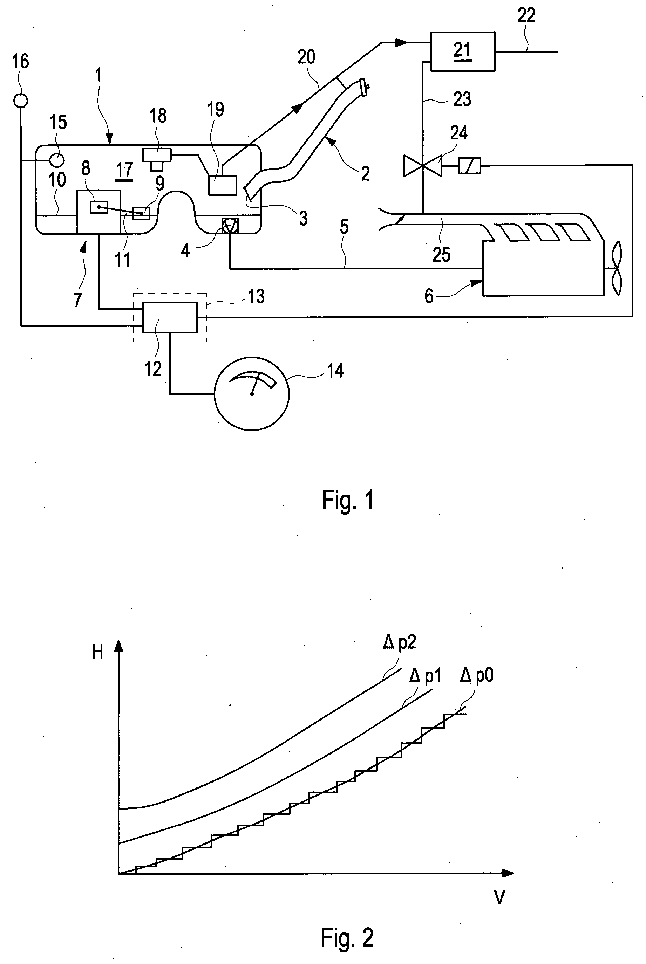

Der in Fig. 1 schematisch dargestellte Kraftstofftank 1 eines Kraftfahrzeugs besitzt zum Betanken einen verschließbaren Einfüllstutzen 2, der am unteren Ende mit einer Klappe 3 versehen ist. Die Entnahme des Kraftstoffs aus dem Tank 1 erfolgt mittels einer Kraftstoffpumpe 4, die den Kraftstoff durch eine Kraftstoffleitung 5 zu einem Verbrennungsmotor 6 des Kraftfahrzeugs fördert.

Innerhalb des Kraftstofftanks 1 befindet sich eine Mess- und Signalerzeugungseinrichtung 7, die den aktuellen Füllstand des Kraftstoffs im Kraftstofftank 1 misst und ein mit diesem Füllstand korrelierendes Füllstandsignal erzeugt.

Die Mess- und Signalerzeugungseinrichtung 7 umfasst dazu einen Füllstand-Signalgeber 8 und einen Schwimmkörper 9, der an der Kraftstoffoberfläche 10 schwimmt und über einen Arm 11 mit dem Signalgeber 8 gekoppelt ist. Wenn sich der Füllstand im Kraftstofftank 1 verändert, ändert sich die Winkelausrichtung des Arms 11 in Bezug zum Signalgeber 8. Durch diese Veränderung verändert sich innerhalb des Signalgebers 8 ein elektrischer Widerstand, der mit dem Füllstand des Kraftstoffs im Kraftstofftank 1 korreliert.

Das vom Füllstand-Signalgeber 8 erzeugte Füllstandsignal wird einer Steuerung 12 zugeführt, die in ein Motorsteuergerät 13 des Verbrennungsmotors 6 integriert sein kann, und wird in der Steuerung 12 anhand von Kennlinien in ein entsprechendes Füllvolumen umgerechnet. Die Steuerung 12 erzeugt ein Volumensignal, das mit dem berechneten Füllvolumen korreliert, und von der Steuerung 12 aus zu einer Tankanzeige 14 auf einer Instrumententafel des Kraftfahrzeugs zugeführt wird.

Wie in der eingangs genannten DE 10 2010 045 212 A1 beschrieben ist, kann durch eine Verformung des Kraftstofftanks 1 zum einen der gemessene Füllstand verfälscht werden. Zum anderen ist auch die Beziehung zwischen dem gemessenen Füllstand und dem daraus errechneten Füllvolumen des Kraftstofftanks 1 von einer eventuellen Verformung des Kraftstofftanks 1 abhängig. Die Verformung des Kraftstofftanks 1 wiederum ist von der Druckdifferenz Δp zwischen dem Atmosphärendruck pA und dem Dampfdruck pK im Kraftstofftank 1 abhängig.

Zur Verdeutlichung dieser Abhängigkeit zeigt Fig. 2 drei Füllstands-Füllvolumen-Kennlinien, die für drei verschiedene Druckdifferenzen Δp0, Δp1 und Δp2 im Kraftstofftank 1 die Beziehung zwischen dem Füllvolumen V und der gemessenen Füllhöhe H zeigen, wobei p0 = 0 mbar, p1 = - 20 mbar und p2 = - 40 mbar. Wie in Fig. 2 nur für die unterste Kurve angezeigt ist, besitzen die Kennlinien in der Realität keinen stetigen Verlauf, sondern verlaufen treppenförmig.

Zur Messung des Dampfdrucks pK im Kraftstofftank 1 bzw. des Atmosphärendrucks pA dienen zwei Drucksensoren 15, 16, von denen der Drucksensor 15 in einem Gas- oder Kopfraum 17 des Kraftstofftanks 1 und der Drucksensor 16 außerhalb des Kraftstofftanks 1 angeordnet ist. Die Messwerte der beiden Drucksensoren 15, 16 werden der Steuerung 12 zugeführt.

Der Kraftstofftank 1 ist mit einer Tankentlüftungseinrichtung ausgestattet, die beim Betanken des Kraftfahrzeugs sowie bei einem Anstieg der Umgebungstemperatur eine Entlüftung des Kraftstofftanks 1 gestattet. Die Tankentlüftungseinrichtung umfasst ein oder mehrere im Gas- oder Kopfraum 17 angeordnete Entlüftungsventile 18 (nur eines dargestellt), die durch eine Flüssigkeitsfalle 19 und eine Tankentlüftungsleitung 20 mit einem Aktivkohlefilter 21 außerhalb des Kraftstofftanks 1 verbunden sind.

Der Aktivkohlefilter 21 verhindert, dass bei der Entlüftung des Kraftstofftanks 1 flüchtige Kohlenwasserstoffe (HC) aus dem Gas- oder Kopfraum 17 in die Umgebung gelangen und enthält zu diesem Zweck eine Füllung aus Aktivkohle, welche die flüchtigen Kohlenwasserstoffe (HC) absorbiert. Der Aktivkohlefilter 21 weist einen mit der Umgebung kommunizierenden Ein- und Auslass 22 auf. Zur Regeneration des Aktivkohlefilters 21 ist dieser durch eine Spülleitung 23 mit einem Ansaugtrakt 25 des Verbrennungsmotors 6 verbunden. Die Spülleitung 23 enthält ein elektromagnetisches Spülventil 24, das normalerweise geschlossen ist und von der Steuerung 12 zu Beginn jeder Regeneration des Aktivkohlefilters 21 geöffnet wird. Bei geöffnetem Spülventil 24 wird durch den Unterdruck im Ansaugtrakt 25 Umgebungsluft in den Aktivkohlefilter 21 und durch diesen hindurch in den Ansaugtrakt 25 angesaugt. Dabei wird der Aktivkohlefilter 21 gespült und die flüchtigen Kohlenwasserstoffe in den Brennräumen des Verbrennungsmotors 6 verbrannt. Nach Abschluss der Regeneration wird das Spülventil 24 wieder geschlossen.

Wenn bei geöffnetem Spülventil 24 der im Ansaugtrakt 25 herrschende Unterdruck am Aktivkohlefilter 21 anliegt, pflanzt sich dieser Unterdruck durch die Tankentlüftungsleitung 20 bis in den Gas- oder Kopfraum 17 des Kraftstofftanks 1 hinein fort. Obwohl der Kraftstofftank 1 eine gewisse Verformungsfestigkeit besitzt, kann dadurch eine Verformung des Kraftstofftanks 1 verursacht werden, wenn der Unterdruck pU im Kraftstofftank 1 einen vorbestimmten kritischen Unterdruck-Schwellenwert pUkrit unterschreitet, das heißt, wenn die Druckdifferenz Δp zwischen dem Atmosphärendruck pA und dem Dampfdruck pK im Kraftstofftank 1 einen vorgegebenen Schwellenwert übersteigt.

Um zu vermeiden, dass eine solche Verformung zur Anzeige eines fehlerhaften Füllvolumens an der Tankanzeige 14 führt, wird in der Steuerung 12 entweder das vom Füllstand-Signalgeber 8 erzeugte Füllstandsignal oder das daraus von der Steuerung 13 berechnete Volumensignal modifiziert, wobei nachfolgend zwei alternative Verfahrensalternativen für die Modifikation des Signals beschrieben werden.

Beide Verfahrensalternativen haben als Gemeinsamkeit, dass die Steuerung 12 das möglicherweise fehlerhafte Füllstand- oder Volumensignal immer dann modifiziert, wenn der Unterdruck pU im Kraftstofftank 1 während einer Regeneration des Aktivkohlefilters 21, das heißt bei geöffnetem Spülventil 24, den vorbestimmten kritischen Unterdruck-Schwellenwert pUkrit unterschreitet.

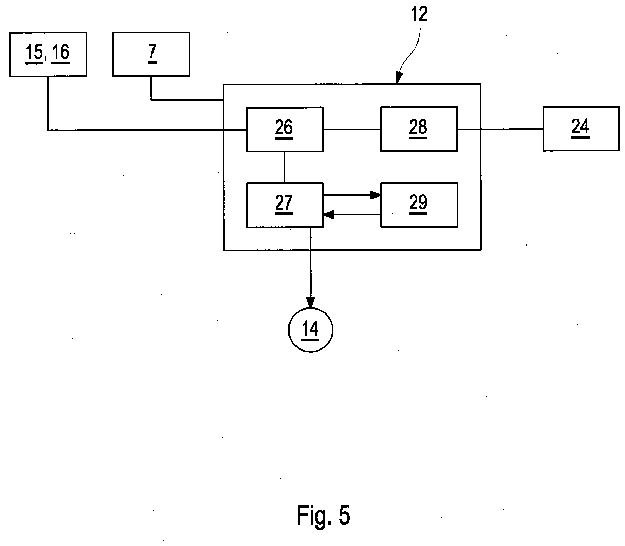

Eine weitere Gemeinsamkeit beider Verfahrensalternativen besteht darin, dass die Steuerung 12 den Unterdruck pU im Kraftstofftank 1 aus der Druckdifferenz Δp zwischen dem vom Drucksensor 16 gemessenen Atmosphärendruck pA und dem vom Drucksensor 15 gemessenen Druck pK im Kraftstofftank 1 ermittelt und die ermittelte Druckdifferenz Δp dann mit dem kritischen Unterdruck-Schwellenwert pUkrit vergleicht, um Unterschreitungen des Schwellenwerts festzustellen. Die Steuerung 12 enthält zu diesem Zweck drei Schaltungen 26, 27 und 28 sowie einen Speicher 29, wie in Fig. 5 schematisch dargestellt.

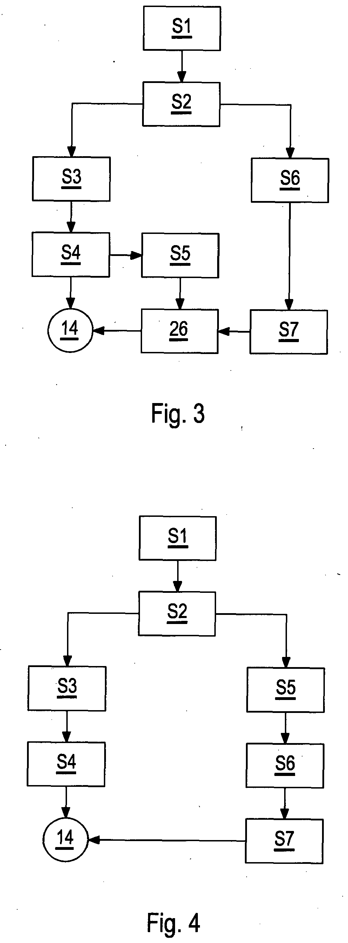

Bei der Verfahrensalternative gemäß Fig. 3 wird das möglicherweise fehlerhafte Volumensignal von der Schaltung 27 in der Steuerung 12 ausgeblendet oder unterdrückt und durch ein anderes Volumensignal ersetzt, das im Rahmen dieser Patentanmeldung auch als Ersatz-Signal bezeichnet wird.

Wie in Fig. 3 dargestellt, wird dazu in einem Schritt S1 von der Schaltung 28 geprüft, ob das Spülventil 24 geöffnet ist. Sobald dies der Fall ist, wird in einem Schritt S2 von der Schaltung 26 geprüft, ob Δp < pUkrit oder ob Δp > pUkrit.

Wenn Δp < pUkrit, berechnet die Schaltung 27 in einem Schritt S3 aus dem mittels des Füllstand-Signalgebers 8 ermittelten Füllstand das Füllvolumen und führt in einem Schritt S4 ein dem Füllvolumen entsprechendes Füllvolumensignal ohne eine vorherige Modifikation zur Tankanzeige 14 zu. Darüber hinaus wird das Füllvolumen in einem Schritt S5 in dem mit der Schaltung 27 verbundenen Speicher 29 zwischengespeichert, wobei das aktuelle Füllvolumen jeweils das zuvor im Speicher 29 zwischengespeicherte Füllvolumen ersetzt.

Wenn Δp > pKrit, dann unterdrückt die Schaltung 27 in einem Schritt S6 das möglicherweise fehlerhafte Volumensignal und führt der Tankanzeige 14 in einem Schritt S7 ein Volumensignal zu, das dem im Speicher 29 zwischengespeicherten Füllvolumen entspricht.

Bei der Verfahrensalternative gemäß Fig. 4 wird das möglicherweise fehlerhafte Füllvolumen hingegen von der Steuerung 12 korrigiert und ein korrigiertes Volumensignal zur Tankanzeige 14 zugeführt.

Wie in Fig. 4 dargestellt, wird dabei ebenfalls in einem Schritt S1 von der Schaltung 28 geprüft, ob das Spülventil 24 geöffnet ist. Sobald dies der Fall ist, wird in einem Schritt S2 von der Schaltung 26 geprüft, ob Δp < pUkrit oder ob Δp > pUkrit.

Wenn Δp < pUkrit, berechnet die Schaltung 27 in einem Schritt S3 aus dem mittels des Füllstand-Signalgebers 8 ermittelten Füllstand das Füllvolumen und führt in einem Schritt

S4 ein dem Füllvolumen entsprechendes Füllvolumensignal ohne eine vorherige Modifikation oder Korrektur zur Tankanzeige 14 zu.

Wenn Δp > pKrit, ermittelt die Schaltung 27 in einem Schritt S5 einen vom jeweiligen Unterdruck pU im Kraftstofftank 1 abhängigen Korrekturwert, der die durch die Verformung des, Kraftstofftanks 1 bedingte Abweichung des Füllvolumens kompensiert. Die werkseitig berechneten Korrekturwerte sind zum Beispiel im Speicher 29 abgelegt. Die Schaltung 27 korrigiert dann in einem Schritt S6 das berechnete Füllvolumen um den ermittelten Korrekturwert und führt dann der Tankanzeige 14 in einem Schritt S7 ein Volumensignal zu, das dem korrigierten Füllvolumen entspricht.

Bei beiden Verfahrensalternativen endet die Zufuhr eines modifizierten Füllvolumensignals zur Tankanzeige 14, sobald entweder von der Schaltung 26 festgestellt wird, dass der im Kraftstofftank 1 herrschende Unterdruck pU den kritischen Unterdruck-Schwellenwert pUkrit nicht mehr unterschreitet oder sobald von der Schaltung 28 das Schließen des Spülventils 24 festgestellt wird.

### BEZUGSZEICHENLISTE

- 1: Kraftstofftank
- 2: Einfüllstutzen
- 3: Klappe
- 4: Kraftstoffpumpe
- 5: Kraftstoffleitung
- 6: Verbrennungsmotor
- 7: Mess- und Signalerzeugungseinrichtung
- 8: Füllstand-Signalgeber
- 9: Schwimmkörper
- 10: Kraftstoffoberfläche
- 11: Arm
- 12: Steuerung
- 13: Motorsteuergerät
- 14: Tankanzeige
- 15: Drucksensor
- 16: Drucksensor
- 17: Gas- oder Kopfraum
- 18: Entlüftungsventil
- 19: Flüssigkeitsfalle
- 20: Tankentlüftungsleitung
- 21: Aktivkohlefilter
- 22: Ein- und Auslass
- 23: Spülleitung
- 24: Spülventil
- 25: Ansaugtrakt
- 26: Schaltung
- 27: Schaltung
- 28: Schaltung
- 29: Speicher

## Patentansprüche

1. Kraftstofftank (1) für einen Verbrennungsmotor (6), mit Einrichtungen (7, 12) zum Ermitteln des Füllstands oder Füllvolumens im Kraftstofftank (1), zum Erzeugen eines mit dem Füllstand oder Füllvolumen korrelierenden Signals und zum Zuführen des Signals zu einer Tankanzeige (14), sowie mit einer Einrichtung (27) zum Modifizieren des Signals bei einer Verformung des Kraftstofftanks (1), **gekennzeichnet durch** Mittel (28) zum Aktivieren der Einrichtung (27), wenn während einer Regeneration eines mit dem Kraftstofftank (1) kommunizierenden Aktivkohlefilters (21) ein Ventil (24) zwischen dem Aktivkohlefilter (21) und einem Ansaugtrakt (25) des Verbrennungsmotors (6) geöffnet ist.

2. Kraftstofftank (1) nach Anspruch 1, **dadurch gekennzeichnet, dass** die Einrichtung (27) das Signal korrigiert, wenn bei geöffnetem Ventil (24) ein im Kraftstofftank (1) herrschender Unterdruck (pU) einen kritischen Unterdruck-Schwellenwert (pUkrit) unterschreitet.

3. Kraftstofftank (1) nach Anspruch 1, **dadurch gekennzeichnet, dass** die Einrichtung (27) das Signal unterdrückt, wenn bei geöffnetem Ventil (24) ein im Kraftstofftank (1) herrschender Unterdruck (pU) den kritischen Unterdruck-Schwellenwert (pUkrit) unterschreitet, und dass die Einrichtungen (7, 12) das Signal wieder zur Tankanzeige (14) zuführen, sobald der im Kraftstofftank (1) herrschende Unterdruck (pU) den kritischen Unterdruck-Schwellenwert (pUkrit) nicht mehr unterschreitet.

4. Kraftstofftank (1) nach Anspruch 2 oder 3 **gekennzeichnet durch** zwei Drucksensoren (15, 16) zur Messung des Atmosphärendrucks (pA) und des Dampfdrucks (pK) im Kraftstofftank (1) als Grundlage für die Ermittlung des im Kraftstofftank (1) herrschenden Unterdrucks (pU).

5. Kraftstofftank (1) nach einem der vorangehenden Ansprüche, **dadurch gekennzeichnet, dass** die Einrichtung (27) das Signal unterdrückt und während der Unterdrückung des Signals ein Ersatz-Signal zur Tankanzeige (14) zuführt, das mit einem unmittelbar vor dem Öffnen des Ventils (24) ermittelten und gespeicherten Füllstand oder Füllvolumen korreliert.

6. Kraftstofftank (1) nach einem der Ansprüche 1 bis 4, **dadurch gekennzeichnet, dass** die Einrichtung (27) das Signal korrigiert und ein korrigiertes, die Verformung des Kraftstofftanks (1) berücksichtigendes Signal zur Tankanzeige (14) zuführt.

7. Verfahren zum Anzeigen eines Füllstands oder Füllvolumens eines Kraftstofftanks (1) eines Verbrennungsmotors (6), bei dem der Füllstand oder das Füllvolumen ermittelt, ein mit dem Füllstand oder Füllvolumen korrelierendes Signal erzeugt und zu einer Tankanzeige (14) zugeführt wird, und bei dem das Signal bei einer Verformung des Kraftstofftanks (1) modifiziert wird, **dadurch gekennzeichnet, dass** die Modifikation des Signals bei der Regeneration eines mit dem Kraftstofftank (1) kommunizierenden Aktivkohlefilters (21) ausgelöst wird.

8. Verfahren nach Anspruch 7, **dadurch gekennzeichnet, dass** das Signal bei der Regeneration des Aktivkohlefilters (21) modifiziert wird, wenn ein im Kraftstofftank (1) herrschender Unterdruck (pU) einen kritischen Unterdruck-Schwellenwert (pUkrit) unterschreitet.

9. Verfahren nach Anspruch 7 oder 8, **dadurch gekennzeichnet, dass** das Signal unterdrückt oder ausgeblendet wird und der Tankanzeige (14) statt dessen ein Ersatz-Signal zugeführt wird, das mit einem unmittelbar zuvor ermittelten und gespeicherten Füllstand oder Füllvolumen korreliert.

10. Verfahren nach Anspruch 7 oder 8, **dadurch gekennzeichnet, dass** das modifizierte Signal ein korrigiertes, die Verformung des Kraftstofftanks (1) berücksichtigendes Signal ist.

## Claims

1. Fuel tank (1) for an internal combustion engine (6), having devices (7, 12) for determining the filling level or filling volume in the fuel tank (1), for generating a signal correlating with the filling level or filling volume, and for delivering the signal to a tank indicator (14), and having a device (27) for modifying the signal in the event of deformation of the fuel tank (1), **characterised by** means (28) for activating the device (27) when, during regeneration of an activated carbon filter (21) in communication with the fuel tank (1), a valve (24) between the activated carbon filter (21) and an intake duct (25) of the internal combustion engine (6) is opened.

2. Fuel tank (1) according to claim 1, **characterised in that** the device (27) corrects the signal when, with the valve (24) open, a reduced pressure (pU) prevailing in the fuel tank (1) lies below a critical reduced pressure threshold (pUkrit).

3. Fuel tank (1) according to claim 1, **characterised in that** the device (27) suppresses the signal when, with the valve (24) open, a reduced pressure (pU) prevailing in the fuel tank (1) lies below a critical reduced pressure threshold (pUkrit), and **in that** the devices (7, 12) deliver the signal to the tank indicator (14) again as soon as the reduced pressure (pU) prevailing in the fuel tank (1) no longer lies below the critical reduced pressure threshold (pUkrit).

4. Fuel tank (1) according to claim 2 or 3, **characterised by** two pressure sensors (15, 16) for measuring the atmospheric pressure (pA) and the vapour pressure (pK) in the fuel tank (1), as a basis for determining the reduced pressure (pU) prevailing in the fuel tank (1).

5. Fuel tank (1) according to any one of the preceding claims, **characterised in that** the device (27) suppresses the signal and, while the signal is being suppressed, delivers a substitute signal, which correlates with a filling level or filling volume that was determined and stored immediately before the valve (24) was opened, to the tank indicator (14).

6. Fuel tank (1) according to any one of claims 1 to 4, **characterised in that** the device (27) corrects the signal and delivers a corrected signal, which takes the deformation of the fuel tank (1) into account, to the tank indicator (14).

7. Method for indicating a filling level or filling volume of a fuel tank (1) of an internal combustion engine (6), in which the filling level or the filling volume is determined, a signal correlating with the filling level or filling volume is generated and delivered to a tank indicator (14), and in which the signal is modified in the event of deformation of the fuel tank (1), **characterised in that** the modification of the signal is initiated during regeneration of an activated carbon filter (21) in communication with the fuel tank (1).

8. Method according to claim 7, **characterised in that** the signal is modified, during regeneration of the activated carbon filter (21), when a reduced pressure (pU) prevailing in the fuel tank (1) lies below a critical reduced pressure threshold (pUkrit).

9. Method according to claim 7 or 8, **characterised in that** the signal is suppressed or blocked and a substitute signal, which correlates with a filling level or filling volume that was determined and stored immediately before, is delivered instead of it to the tank indicator (14).

10. Method according to claim 7 or 8, **characterised in that** the modified signal is a corrected signal which takes the deformation of the fuel tank (1) into account.

## Revendications

1. Réservoir de carburant (1) pour un moteur à combustion interne (6), avec des dispositifs (7, 12) destinés à déterminer le niveau de remplissage ou le volume de remplissage dans le réservoir de carburant (1), à produire un signal corrélé au niveau de remplissage ou au volume de remplissage et à envoyer le signal à une jauge de carburant (14) ainsi qu'avec un dispositif (27) destiné à modifier le signal lors d'une déformation du réservoir de carburant (1), **caractérisé par** des moyens (28) destinés à activer le dispositif (27) lorsque, pendant la régénération d'un filtre à charbon actif (21) communiquant avec le réservoir de carburant (1), une soupape (24) entre le filtre à charbon actif (21) et une voie d'aspiration (25) du moteur à combustion interne (6) est ouverte.

2. Réservoir de carburant (1) selon la revendication 1, **caractérisé en ce que** le dispositif (27) corrige le signal lorsque, alors que la soupape (24) est ouverte, une dépression (pU) régnant dans le réservoir de carburant (1) devient inférieure à la valeur de seuil critique de dépression (pUkrit).

3. Réservoir de carburant (1) selon la revendication 1, **caractérisé en ce que** le dispositif (27) supprime le signal lorsque, alors que la soupape (24) est ouverte, une dépression (pU) régnant dans le réservoir de carburant (1) devient inférieure à la valeur de seuil critique de dépression (pUkrit) et **en ce que** les dispositifs (7, 12) envoient à nouveau le signal à la jauge de carburant (14) dès que la dépression (pU) régnant dans le réservoir de carburant (1) n'est plus inférieure à la valeur de seuil critique de dépression (pUkrit).

4. Réservoir de carburant (1) selon la revendication 2 ou 3, **caractérisé par** deux capteurs de pression (15, 16) destinés à mesurer la pression atmosphérique (pA) et la pression de vapeur (pK) dans le réservoir de carburant (1) comme base de la détermination de la dépression (pU) régnant dans le réservoir de carburant (1).

5. Réservoir de carburant (1) selon l'une quelconque des revendications précédentes, **caractérisé en ce que** le dispositif (27) supprime le signal et, pendant la suppression du signal, envoie à la jauge de carburant (14) un signal de remplacement qui est corrélé au niveau ou volume de remplissage déterminé juste avant l'ouverture de la soupape (24) et mémorisé.

6. Réservoir de carburant (1) selon l'une quelconque des revendications 1 à 4, **caractérisé en ce que** le dispositif (27) corrige le signal et envoie à la jauge de carburant (14) un signal corrigé tenant compte de la déformation du réservoir de carburant (1).

7. Procédé d'affichage d'un niveau de remplissage ou volume de remplissage d'un réservoir de carburant (1) d'un moteur à combustion interne (6), procédé dans lequel on détermine le niveau de remplissage ou le volume de remplissage, on produit un signal corrélé au niveau de remplissage ou au volume de remplissage et on l'envoie à une jauge de carburant (14) et dans lequel on modifie le signal lors d'une déformation du réservoir de carburant (1), **caractérisé en ce que** la modification du signal est déclenchée lors de la régénération d'un filtre à charbon actif (21) communiquant avec le réservoir de carburant (1).

8. Procédé selon la revendication 7, **caractérisé en ce qu'**on modifie le signal lors de la régénération du filtre à charbon actif (21) lorsqu'une dépression (pU) régnant dans le réservoir de carburant (1) devient inférieure à une valeur de seuil critique de dépression (pUkrit).

9. Procédé selon la revendication 7 ou 8, **caractérisé en ce qu'**on supprime ou efface le signal et on envoie à la place à la jauge de carburant (14) un signal de remplacement qui est corrélé avec un niveau ou volume de remplissage déterminé juste avant et mémorisé.

10. Procédé selon la revendication 7 ou 8, **caractérisé en ce que** le signal modifié est un signal corrigé tenant compte de la déformation du réservoir de carburant (1).
